# EUROPÄISCHE PATENTSCHRIFT

(11) **EP 2 171 408 B1**
(45) Veröffentlichungstag und Bekanntmachung des Hinweises auf die Patenterteilung: **13.09.2017**
(21) Anmeldenummer: 08775196.2
(22) Anmeldetag: 18.07.2008
(51) Int. Cl.: G01F 11/10, G01F 11/28, B65G 53/46, G01N 1/20, B65B 37/20, B65B 1/36

(54) **DOSIEREINRICHTUNG UND DOSIERVERFAHREN**
DOSING DEVICE AND DOSING METHOD
DISPOSITIF ET PROCÉDÉ DE DOSAGE

(30) Priorität: 18.07.2007 DE 102007033387
(43) Veröffentlichungstag der Anmeldung: 07.04.2010
(73) Patentinhaber: FLSmidth A/S, 2500 Valby (DK)
(72) Erfinder: HAAS, Ernst Michael, 42115 Wuppertal (DE)
(86) Internationale Anmeldenummer: PCT/EP2008/059417
(87) Internationale Veröffentlichungsnummer: WO 2009/010574

(56) Entgegenhaltungen:
- DE-A1- 2 265 293
- GB-A- 2 310 196
- GB-A- 191 124 656
- GB-A- 191 313 509
- US-A- 3 565 132

## Beschreibung

Die vorliegende Erfindung betrifft zunächst eine Dosiereinrichtung zur volumetrischen Dosierung von rieselfähigem Dosiergut, vorzugsweise von rieselfähigem Probenmaterial, aufweisend zumindest ein nach oben hin offenes, vorzugsweise becherartiges, Dosiergefäß, dessen Öffnungsrand einen Öffnungsquerschnitt bestimmt, und zumindest einen Dosierabstreifer mit einer dem Öffnungsquerschnitt zugeordneten, vorzugsweise dazu parallel verlaufenden, Abstreifkante, wobei das Dosiergefäß und / oder der Dosierabstreifer, vorzugsweise geführt, beweglich ist / sind zur Erzielung einer seitlichen relativen Abstreifbewegung zwischen dem Dosiergefäß und der Abstreifkante, wobei eine Längsführung vorgesehen ist, entlang welcher der Dosierabstreifer quer, vorzugsweise senkrecht, zu dem Öffnungsquerschnitt geführt verlagerbar ist.

Derartige Dosiereinrichtungen eignen sich bei vielfältigen Anwendungen zur vorzugsweise automatisierten volumetrischen, d. h. auf das Volumen bezogenen Dosierung von rieselfähigen Materialien, die insofern als Dosiergut bezeichnet werden. Im Rahmen der Erfindung steht die Verwendung an bzw. in Verbindung mit sog. Probenaufbereitungsautomaten im Vordergrund. Diese können zur Vor- bzw. Aufbereitung von Probenmaterial für Materialuntersuchungen und insbesondere auch bereits zur Durchführung von Untersuchungen selbst dienen, so dass insofern auch von Probenaufbereitungs- und -untersuchungsvorrichtungen zu sprechen ist. Bei dem Probenmaterial kann es sich bspw. um aus einer Gießerei entnommene Schlacke, um Zementgranulat usw., aber auch um praktisch beliebige andere Schüttgüter handeln. Bei bestimmten Untersuchungen wird für Vergleichszwecke eine immer wieder genau reproduzierbare und insofern bestimmte Materialmenge benötigt. Die genannte Dosiereinrichtung wird dazu eingesetzt, um zunächst eine solche benötigte Probenmenge volumetrisch möglichst genau aus einer größeren Menge zu separieren. Herkömmlich wird dazu das Probengut von oben zunächst mit Überschuss in einen nach oben offenen sog. Dosierlöffel eingefüllt, so dass sich an der Oberseite ein Schüttkegel bildet. Nach einer evtl. anschließenden Verdichtung des Probenmaterials im Dosiergefäß mittels Schwingungen wird der Schüttkegel anschließend zur möglichst genauen Dosierung mit dem Dosierabstreifer entfernt. Insofern kann der Dosierabstreifer im Rahmen der Erfindung auch als Schüttkegel-Egalisator, Schüttkegel-Abstreifer oder einfach Abstreifer bezeichnet werden. Das Abstreifen selbst erfolgt durch eine seitliche Relativbewegung zwischen dem Dosierlöffel und dem Abstreifer, dessen Abstreifkante bei dieser Anwendung häufig auf Höhe des Löffelrandes bzw. des oberen Dosiergefäßrandes (oder etwas höher) liegt. In der Praxis können dadurch Probleme auftreten, dass das über den Becherrand emporragende Probengranulat (Schüttkegel), auch abhängig von der Granulatgröße, -form und -oberflächenrauhheit, einen gewissen seitlichen Halt, bzw. Verankerung in den darunter liegenden Materialschichten findet und dadurch beim Abstreifen in ungünstigen Situationen einen Widerstand erzeugen kann, der zu Beschädigungen des Abstreifers führen kann. Insbesondere kann dadurch die Abstreiferkante beschädigt und in ihrer Kontur verändert werden, was sich auf spätere Dosiervorgänge nachteilig auswirken kann. Auch besteht die Gefahr, dass andere Einrichtungen, bspw. Antriebseinrichtungen, durch zu hohe beim Abstreifvorgang auftretende Seitenkräfte beschädigt werden. Eine Dosiereinrichtung der eingangs genannten Art, allerdings für eine völlig abweichende Verwendung an einer Teebeutel-Abpackmaschine, ist aus DE 37 20 362 C1 bekannt. Bei den Dosiergefäßen handelt es sich um in die Oberfläche eines Zylinders eingelassene napfartige Vertiefungen, wobei besagte Oberfläche des drehangetriebenen Zylinders den Boden einer mit zerschnittenen Teeblättern gefüllten Vorratskammer bildet. Auf der Umfangsfläche des Dosierrades liegt die Messerkante eines Dosierabstreifers auf. Die Lehre der Druckschrift ist darauf gerichtet, dass ein in der Höhe kontrollierbarer Fülldruck möglichst über den gesamten Bereich des unteren Öffnungsquerschnittes der Füllkammer nachhaltig gewährleistet ist. Im Stand der Technik ist eine gattungsgemäße Dosiereinrichtung aus GB 13 509 A bekannt. GB 24 656 A offenbart eine Vorrichtung zur Dosierung von Farbpulver, wobei als Dosiergefäße in einer Walze vertieft eingelassene Näpfchen vorhanden sind.

Ein das Pulver zuführender Trichter bildet an seiner positionsmäßig festliegenden Mündung eine Abstreifkante, die während einer Drehbewegung der Walze über die Öffnungsquerschnitte der Näpfchen bzw. Dosiergefäße streift. Eine weitere Dosiereinrichtung für pulverförmige Stoffe ist aus US 3,565,132 A bekannt. Als Dosiergefäße dienen dort auf einer Drehscheibe vertieft angeordnete Nuten. Diese werden aus einem fest montierten Magazin befüllt, dessen Seitenwände am unteren Rand als Abstreifkante wirken. Aus GB 2 310 196 A ist ein Dosierlöffel für Baby-Milchpulver bekannt, bei dessen Betätigung sich die Abstreifkante zur Dosierung ausschließlich parallel zu dem Öffnungsquerschnitt des Dosierbehälters bewegt.

Vor dem Hintergrund der eingangs erläuterten Problematik liegt der Erfindung die Aufgabe zugrunde, eine Dosiereinrichtung der eingangs genannten Art vorteilhaft weiterzubilden, so dass insbesondere die bekannten möglichen Nachteile möglichst weitgehend vermieden werden.

Die Aufgabe wird gemäß der Erfindung zunächst und im Wesentlichen mit den Merkmalen gelöst, dass Haltemittel vorgesehen sind, die zur Erzeugung und größenmäßig veränderbaren Einstellung bzw. Begrenzung einer auf den Dosierabstreifer in Bezug auf die Längsführung einwirkenden Haltekraft geeignet bzw. daran angepasst sind, wobei bei Überwindung der begrenzten Haltekraft durch Kräfte, die zufolge des Abstreifvorgangs auf den Dosierabstreifer einwirken, eine Rückverlagerung des Dosierabstreifers entlang der Längsführung resultiert. Im Gegensatz zu bekannten Dosiereinrichtungen, bei denen der Dosierabstreifer dem Dosiergefäß in einer zumindest während des Abstreifvorganges und unter den dabei auftretenden Belastungen unveränderbaren, d. h. lagefesten Position zugeordnet ist, liegt der Erfindungsgedanke darin, den Dosierabstreifer entlang seiner Längsführung nur mit einer derart begrenzten Haltekraft zu fixieren, dass er bei im Hinblick auf mögliche Beschädigungen unerwünscht hohen, im Dosierbetrieb selten auftretenden Abstreifkräften selbstständig zur Vermeidung von Beschädigungen aus seiner Abstreifposition zurückweicht. Entsprechend bewirken die Haltemittel erfindungsgemäß keine feste, sondern eine gegen eine bestimmte betriebliche Gegenkraft bei Erreichen eines einstellbaren Schwellenwertes nachgiebige Halterung, welche bei zu hoher Gegenkraft das Zurückweichen bzw. die Freigabe des Abstreifers ermöglicht. Insofern ist für die erfindungsgemäßen Haltemittel auch der Begriff Halte- und Freigabemittel zutreffend. Die Erfindung ermöglicht es insofern, die Haltekraft abgestimmt auf die jeweiligen Anforderungen (bspw. Größe des Öffnungsquerschnitts und verwendetes Dosiergut) auf gezielte Weise einzustellen bzw. zu begrenzen. Die quer zu dem Öffnungsquerschnitt verlaufende Längsführung muss sich nicht notwendig senkrecht zu besagtem Querschnitt erstrecken, sondern für die beschriebene Ausweich- bzw. Rückzugsbewegung kann auch eine zu dem Öffnungsquerschnitt schräg geneigte Längsführung dienen. Als Dosiergefäß kann vorzugsweise in einer Ausgestaltung als sog. Dosierlöffel ein becherartiges Gefäß mit einem oberen, vorzugsweise in einer Ebene verlaufenden Öffnungsrand und einem von dem Becher seitlich ausgehenden Handhabungsfortsatz bzw. "Löffelstiel" dienen. Die Abstreifkante besitzt vorzugsweise einen geraden Verlauf und erstreckt sich beim Abstreifvorgang sowohl über das Innere des Öffnungsquerschnittes als auch über den begrenzenden Öffnungsrand, so dass ein insofern vollständiges Abstreifen ermöglicht wird. Die seitliche Abstreifrelativbewegung findet vorzugsweise entlang einer zu dem Öffnungsquerschnitt parallelen Ebene statt, wobei die Abstreifkante bspw. den Öffnungsrand berühren oder zur Vermeidung einer Berührung geringfügig darüber liegen oder im Fall einer gewünschten Vergrößerung der Dosiermenge über den Becherinhalt hinaus auch praktisch beliebig über dem Öffnungsrand liegen kann. Auch besteht die Möglichkeit, dass die Abstreifkante aus einem harten bzw. gehärteten, vorzugsweise aus einem im Vergleich zu anderen Teilen des Dosierabstreifers und / oder anderer Komponenten der Dosiereinrichtung härteren Material besteht.

Die Haltemittel können vorzugsweise Einstellmittel aufweisen, die eine dosierte, reproduzierbare Einstellung der Haltekraft ermöglichen bzw. hieran angepasst sind. Die Haltekraft wird zweckmäßig so eingestellt, dass sie betragsmäßig innerhalb, vorzugsweise am unteren Rand, eines oberen Teilbereiches, vorzugsweise des oberen Drittels oder des oberen Viertels oder des oberen Fünftels, des Wertebereichs liegt, innerhalb dessen die zufolge des Abstreifvorganges auf den Dosierabstreifer entlang dessen Längsführung einwirkenden Kräfte liegen. Bei der Haltekraft kann es sich bevorzugt um eine mittels einer Klemmeinrichtung erzeugte Klemmkraft handeln, mit welcher der Dosierabstreifer gegen seine Längsführung bzw. gegen daran befestigte Teile geklemmt wird. Eine derartige Klemmkraft kann vorzugsweise mittels mechanischer Klemmmittel, wie bspw. Klemmschrauben, Klemmfedern oder dergleichen oder auch bspw. mittels eines Druckfluids, also insbesondere pneumatisch oder hydraulisch, erzeugt werden. Im Rahmen der Erfindung ist bevorzugt, dass die Längsführung eine Führungswand aufweist mit zumindest einer darin ausgebildeten, quer, vorzugsweise senkrecht, zu dem Öffnungsquerschnitt des Dosiergefäßes orientierten Langlochdurchgangsöffnung, in die darin längsverschieblich ein Führungsvorsprung des Dosierabstreifers eingreift, wobei vorzugsweise die Dicke der Führungswand größer als die Eingriffstiefe des Führungsvorsprunges darin ist. Um die Längsführung insbesondere stabiler und genauer zu machen, können anstelle nur einer auch zwei oder mehr zueinander parallel orientierte Langlochdurchgangsöffnungen mit darin jeweils eingreifendem Führungsvorsprung vorgesehen sein. Zur Erzielung einer Klemmkraft ist in Verbindung mit den vorgenannten Merkmalen bevorzugt, dass auf der dem Dosierschieber gegenüberliegenden Seite der Führungswand eine Halteplatte bzw. Klemmplatte angeordnet ist, die mit dem Dosierabstreifer durch die Langlochdurchgangsöffnung hindurch mittels einer in der Klemmkraft einstellbaren Klemmverbindung, vorzugsweise mittels einer Schraubverbindung, verbunden ist. Der die Langlochdurchgangsöffnung begrenzende Bereich der Führungswand wird zwischen dem Dosierabstreifer und der Halteplatte mittels der Klemmverbindung sandwichartig mit dosierbarer Klemmkraft eingeklemmt. Der Bewegungswiderstand, mit dem sich der Dosierabstreifer entlang seiner Längsführung verlagern lässt, hängt dabei von der Klemmstärke der Klemmverbindung, insbesondere also von dem Anzieh-Drehmoment der Schrauben, ab. Bei einem hohen Anzieh-Drehmoment werden der Dosierabstreifer und die Halteplatte vergleichsweise stärker gegen gegenüberliegende Oberflächen der Halteplatte angedrückt, so dass, auch abhängig von den Oberflächenreibungs- bzw. -gleiteigenschaften, eine vergleichsweise größere Haltekraft in Führungslängsrichtung entsteht. Analog lässt sich durch ein geringeres Anzieh-Drehmoment in gezielter Weise auch eine entsprechend geringere Haltekraft des Dosierschiebers in Bezug auf die Längsführung einstellen. Eine Möglichkeit zur Beeinflussung der Haltekraft bzw. ihrer Einstellbarkeit besteht auch darin, dass die Halteplatte aus einem anderen Material als die Führungswand und / oder als der Klemmbereich des Dosierabstreifers gewählt sein kann. Vorzugsweise kann die Führungswand aus Stahl oder aus Aluminium und die Halte- bzw. Gleitplatte aus Metall, weiter vorzugsweise aus Buntmetall wie Messing oder Kupfer, hergestellt sein. Es besteht die Möglichkeit, dass der Dosierabstreifer gemeinsam mit der Längsführung einen die Verlagerung des Dosierabstreifers entlang der Längsführung in Richtung auf das Dosiergefäß formschlüssig begrenzenden, vorzugsweise positionseinstellbaren, Anschlag ausbildet, wobei sich in der Anschlagstellung die Abstreifkante vorzugsweise auf Höhe des Öffnungsrandes des Dosiergefäßes oder geringfügig darüber befindet. Insofern besteht die Möglichkeit, dass der Dosierabstreifer vor dem Beginn des Dosierbetriebes mit einer dazu ausreichenden Einstellkraft bis zur Erzielung des Formschlusses gegen den Anschlag verlagert wird. Treten während des Dosierbetriebs keine unerwünscht hohen Abstreifkräfte auf, wird der Dosierabstreifer von der Haltekraft während der gesamten Dauer in der gewünschten Dosierposition (bzw. auf dem gewünschten Dosierniveau) gehalten. Treten andererseits im Dosierbetrieb bei der Verdrängung von Dosiergut unerwünscht hohe Lastspitzen auf, weicht der Dosierabstreifer unter Überwindung der von den Halte- bzw. Klemmmitteln erzeugten Kraft zur Vermeidung von Beschädigungen entlang der Längsführung automatisch von dem Dosiergefäß bzw. von dessen Öffnungsquerschnitt zurück. Die Dosiereinrichtung kann Anzeige- oder Warnmittel (bspw. einen mit einer Warnlampe verbundenen Näherungsschalter) aufweisen, welche die Verlagerung aus der Abstreifposition anzeigen. Es besteht so auch die Möglichkeit, den Dosiervorgang evtl. automatisiert abzubrechen und ggf. erneut zu starten. Insbesondere in Verbindung mit dem beschriebenen Anschlag besteht auch die Möglichkeit, die Haltekraft nicht (wie oben beschrieben) zunächst quer zur Führungslängsrichtung, sondern direkt auf den Dosierabstreifer in seiner Führungslängsrichtung gegen besagten Anschlag einwirken zu lassen. Beispielsweise kann der Dosierabstreifer mittels einer Druckfeder (oder pneumatisch, hydraulisch usw.) gegen den Anschlag vorgespannt werden. Entsteht durch den Abstreifvorgang eine im Vergleich dazu größere Gegenkraft, weicht der Dosierabstreifer zunächst zurück, kehrt dann aber, wenn die Gegenkraft nachlässt, durch die Haltekraft wieder an den Anschlag zurück.

Der Dosierabstreifer kann vorzugsweise eine an die Abstreifkante angrenzende Schrägfläche aufweisen, die in einer zu der Kantenlängsrichtung der Abstreifkante senkrechten Querschnittsebene mit einer horizontalen Bezugslinie, insbesondere mit dem Öffnungsquerschnitt des Dosiergefäßes, einen freien Winkel von weniger als 90 Grad, vorzugsweise einen Winkel im Wertebereich von 30 bis 60 Grad, einschließt. Eine solche Schrägfläche begünstigt einerseits im Zuge der seitlichen Abstreifrelativbewegung eine entlang dieser Fläche nach oben geführte Ableitung von Dosiergutpartikeln, d.h. die Abfuhr von abgestreiftem Dosiergut. Des Weiteren lässt eine solche Schrägfläche zufolge ihrer Neigung bei einer seitlichen Abstreifbewegung auch eine dazu quer bzw. senkrecht orientierte Kraft entstehen, die insbesondere unmittelbar in Längsrichtung des Dosierabstreifers bzw. seiner Längsführung oder parallel dazu wirken kann. Je kleiner der freie Neigungswinkel vorgegeben wird, um so geringer ist das Verhältnis zwischen der in seitlicher Abstreifrichtung auf den Dosierabstreifer wirkenden Kraft und der dazu senkrechten Kraft.

Gemäß einem weiteren Aspekt ist bevorzugt, dass die Führungswand mit dem Dosierabstreifer quer zur Führungsrichtung der Längsführung zur Vermeidung von Bewegungen parallel zu der vom Dosiergefäßrand aufgespannten Ebene ortsfest gehalten ist, dass eine Verfahreinrichtung vorgesehen ist und dass das Dosiergefäß mittels einer Verfahreinrichtung quer zur Führungsrichtung der Längsführung und insbesondere parallel zu dem Öffnungsquerschnitt, vorzugsweise in Form einer innerhalb einer Ebene geraden oder bogenförmigen Verfahrbewegung, unter dem Dosierabstreifer hindurch verfahrbar ist. Eine zweckmäßige Weiterbildung ist dadurch möglich, dass die Dosiereinrichtung zwei zueinander quer, vorzugsweise rechtwinklig, verlaufende Führungswände mit je einem Dosierabstreifer, die einzelne oder mehrere der zuvor beschriebenen Merkmale besitzen, aufweist, und dass die Verfahreinrichtung daran angepasst ist, dass damit das Dosiergefäß wahlweise in einer geraden Verfahrbewegung unter dem ersten Dosierabstreifer oder in einer bogenförmigen Verfahrbewegung unter dem zweiten Dosierabstreifer hindurch verfahrbar ist.

Die Erfindung betrifft weiterhin ein Dosierverfahren zur volumetrischen Dosierung von rieselfähigem Dosiergut, vorzugsweise von rieselfähigem Probenmaterial, unter Verwendung einer Dosiereinrichtung, aufweisend zumindest ein nach oben hin offenes, vorzugsweise becherartiges, Dosiergefäß, dessen Öffnungsrand einen Öffnungsquerschnitt bestimmt, und zumindest einen Dosierabstreifer mit einer dem Öffnungsquerschnitt zugeordneten, vorzugsweise dazu parallel verlaufenden, Abstreifkante, wobei das Dosiergefäß mit rieselfähigem Dosiergut zunächst bis über den Öffnungsquerschnitt befüllt wird und später das Dosiergefäß und / oder der Dosierabstreifer zum Abstreifen von Dosiergut oberhalb des Öffnungsquerschnitts, vorzugsweise zum Abstreifen eines Schüttkegels, seitlich bewegt wird unter Erzeugung einer relativen Abstreifbewegung zwischen dem Dosiergefäß und der Abstreifkante, wobei eine Dosiereinrichtung verwendet wird, welche eine Längsführung aufweist, entlang welcher der Dosierabstreifer quer, insbesondere senkrecht, zu dem Öffnungsquerschnitt verlagerbar ist.

Vor dem Hintergrund des erläuterten Standes der Technik liegt der Erfindung die Aufgabe zugrunde, ein solches Verfahren vorteilhaft weiterzubilden, so dass insbesondere die erläuterten Nachteile möglichst weitgehend vermieden werden. Die Aufgabe ist nach der Erfindung zunächst und im Wesentlichen durch die Merkmale gelöst, dass auf den Dosierabstreifer in Bezug auf die Längsführung, d. h. auch in dessen Führungsrichtung wirkend, eine Haltekraft ausgeübt wird, die betragsmäßig innerhalb des Größenbereiches der zufolge des Abstreifvorganges auf den Dosierabstreifer in dessen Führungsrichtung wirkenden Kräfte liegt, so dass sich der Dosierabstreifer bei Überwindung der Haltekraft durch eine zufolge des Abstreifvorganges auf den Dosierabstreifer einwirkende Kraft entlang der Längsführung zurückverlagert. Zu diesbezüglich möglichen Wirkungen und Vorteilen wird auch auf die vorangehende Beschreibung Bezug genommen. Die Haltekraft kann so eingestellt werden, dass sie betragsmäßig innerhalb, vorzugsweise am unteren Rand, eines oberen Teilbereiches, vorzugsweise des oberen Drittels oder oberen Viertels oder oberen Fünftels, des Wertebereichs liegt, innerhalb dessen sich die von dem Abstreifvorgang auf den Dosierabstreifer in dessen Führungsrichtung ausgeübten Kräfte bewegen. Die Einstellung der Haltekraft kann unter Berücksichtigung des Öffnungsquerschnitts, vorzugsweise von dessen Form und Abmessungen, und unter Berücksichtigung des gewählten Dosierguts, vorzugsweise von dessen Form und Körnungsgröße sowie der Materialoberflächenbeschaffenheit, erfolgen. Das erfindungsgemäße Dosierverfahren kann vorzugsweise unter Verwendung einer erfindungsgemäßen Dosiereinrichtung, welche einzelne oder mehrere der dazu vorangehend beschriebenen Merkmale aufweist, ausgeführt werden.

Die Erfindung wird nachfolgend mit Bezug auf die beigefügten Figuren, welche ein bevorzugtes Ausführungsbeispiel der erfindungsgemäßen Dosiereinrichtung und bevorzugte Dosierverfahren gemäß der Erfindung veranschaulichen, näher beschrieben. Darin zeigt:
- Fig. 1: in einem Schnitt die erfindungsgemäße Dosiereinrichtung gemäß einer bevorzugten Ausführungsform mit benachbarten Teilen einer Probenaufbereitungsvorrichtung, in der zentralen Dosierposition,
- Fig. 2: einen Querschnitt entlang Schnittlinie II - II in Fig. 1,
- Fig. 2a: eine Ausschnittsvergrößerung zu Detail IIa in Fig. 2,
- Fig. 3: einen Schnitt entlang Schnittlinie III - III in Fig. 1,
- Fig. 4: perspektivisch die in Fig. 1 geschnitten dargestellte Anordnung,
- Fig. 5: perspektivisch die in Fig. 4 gezeigte Anordnung, bei entgegengesetzter Blickrichtung,
- Fig. 6: ausgehend von Fig. 4 eine teilweise Explosionsdarstellung,
- Fig. 7: ausgehend von Fig. 5 eine teilweise Explosionsdarstellung,
- Fig. 8: in einer Schnittführung gemäß Fig. 1 einen Schritt bei der Durchführung des erfindungsgemäßen Dosierverfahrens gemäß einer bevorzugten Ausführung, wobei das Dosiergefäß zur Befüllung ausgehend von Fig. 1 seitlich verfahren wurde,
- Fig. 9: einen dem Schritt von Fig. 8 nachfolgenden Verfahrensschritt,
- Fig. 10: einen dem Schritt von Fig. 9 nachfolgenden Verfahrensschritt,
- Fig. 11: einen dem Schritt von Fig. 10 nachfolgenden Verfahrensschritt,
- Fig. 12: einen den Schritt von Fig. 11 nachfolgenden Verfahrensschritt,
- Fig. 13: in einer Draufsicht gemäß Blickrichtung XIII in Fig. 1 zwei Verfahrpositionen des Dosiergefäßes bei der zu den Figuren 8 bis 12 beschriebenen Abstreifbewegung und
- Fig. 14: in einer Draufsicht analog Fig. 13 eine zu den Figuren 8 bis 13 alternative Abstreifbewegung des Dosiergefäßes.

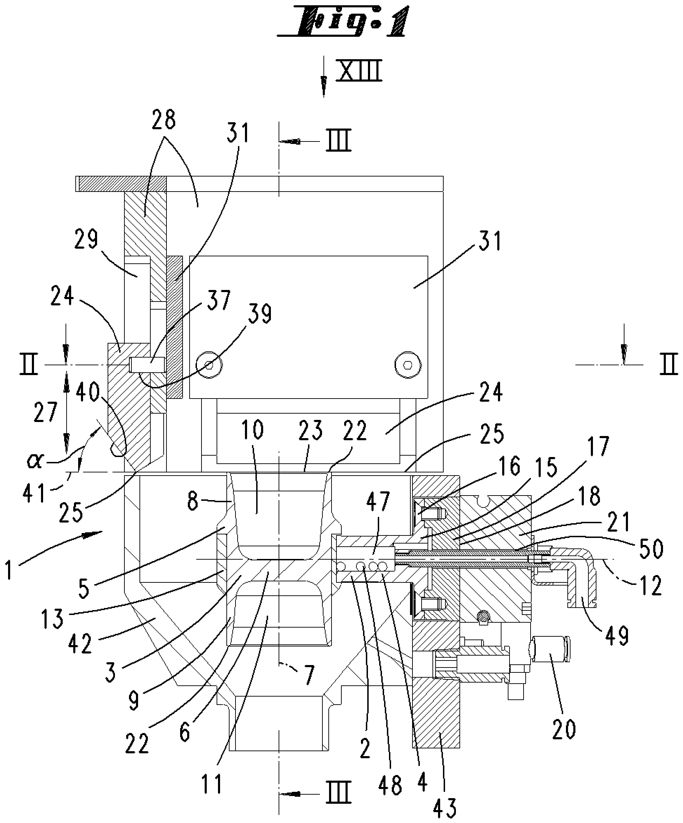

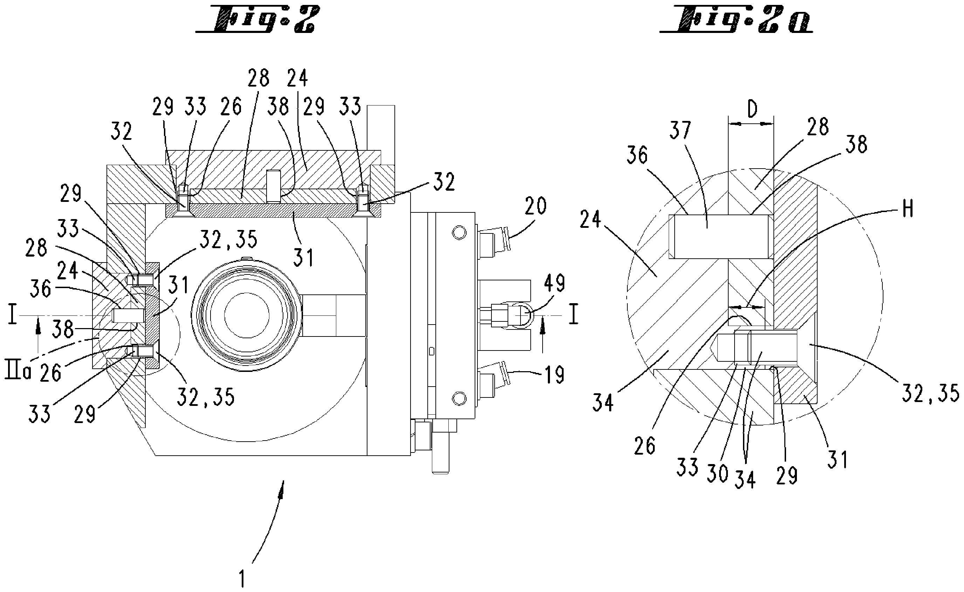

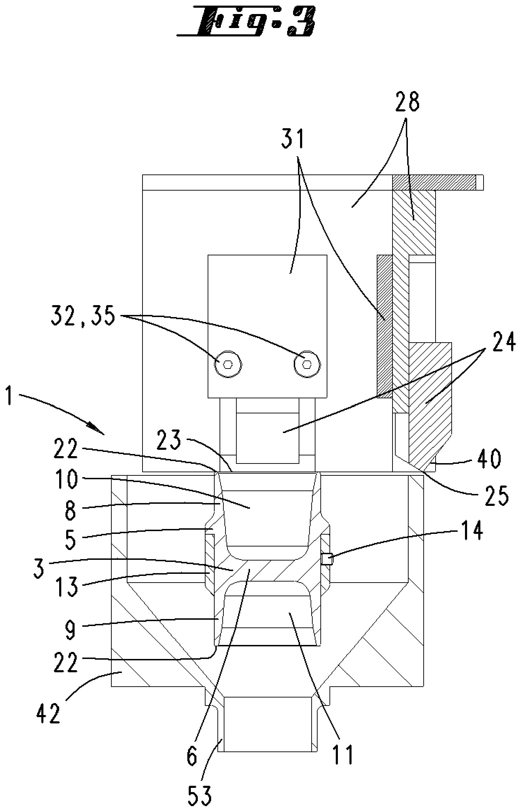

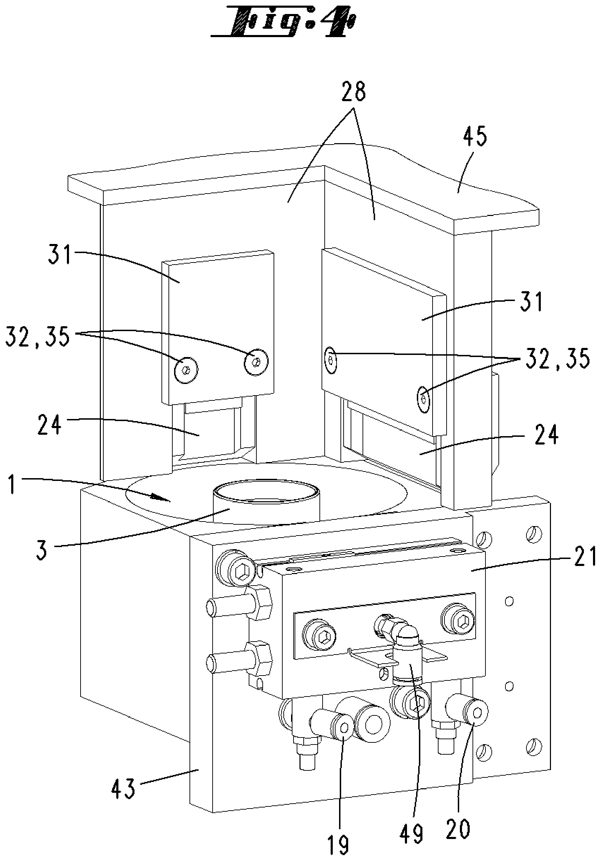

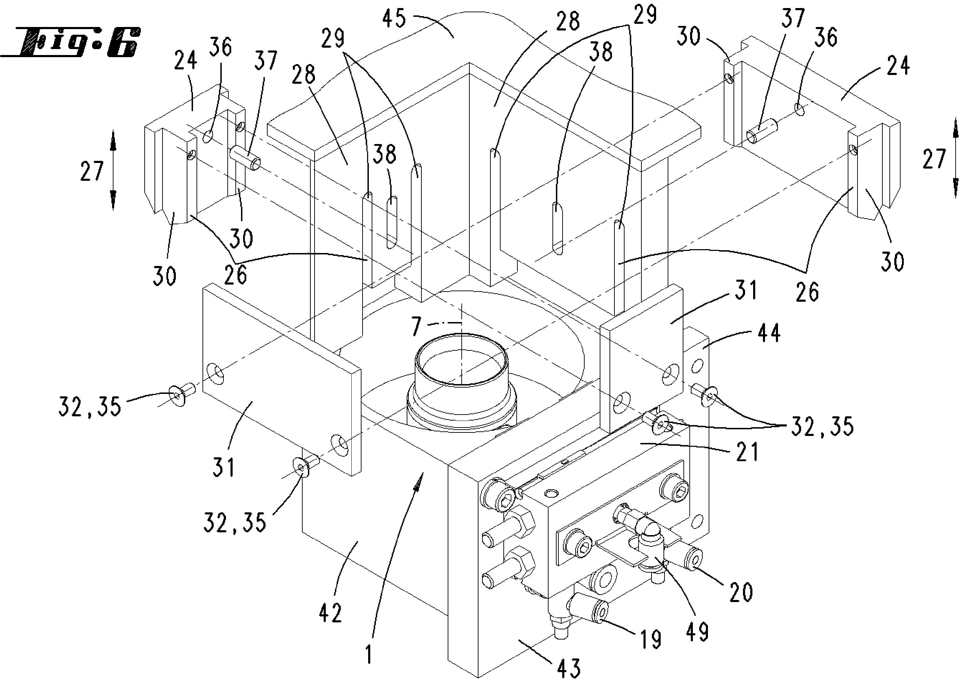

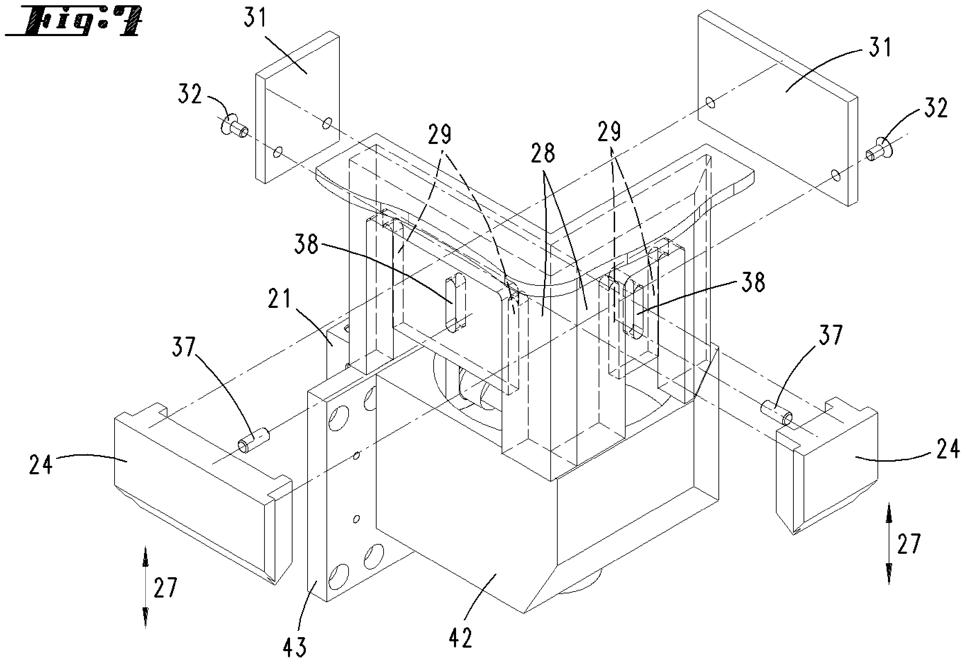

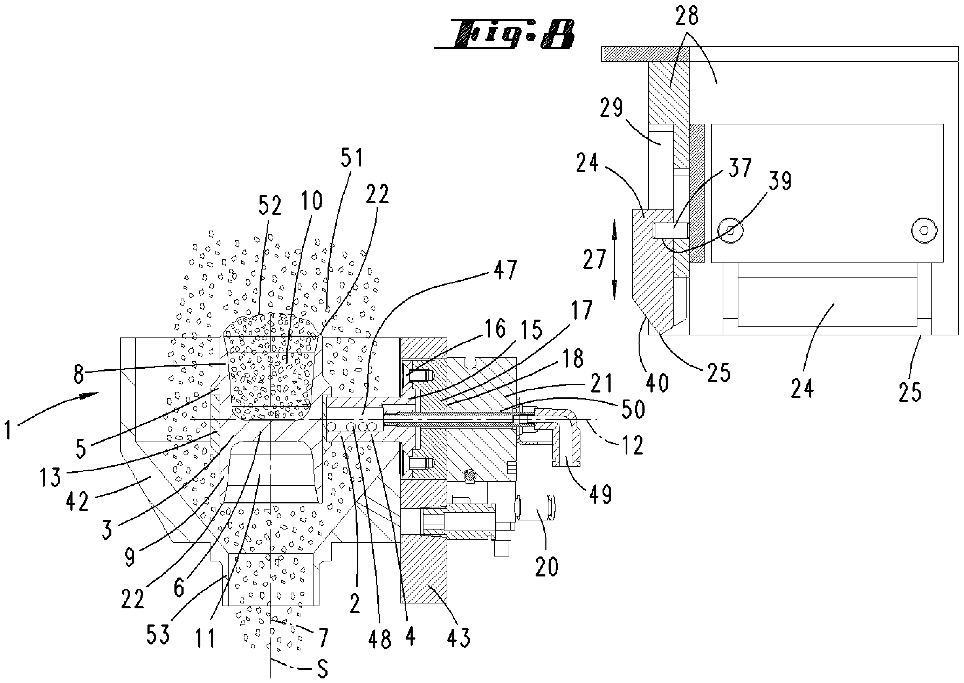

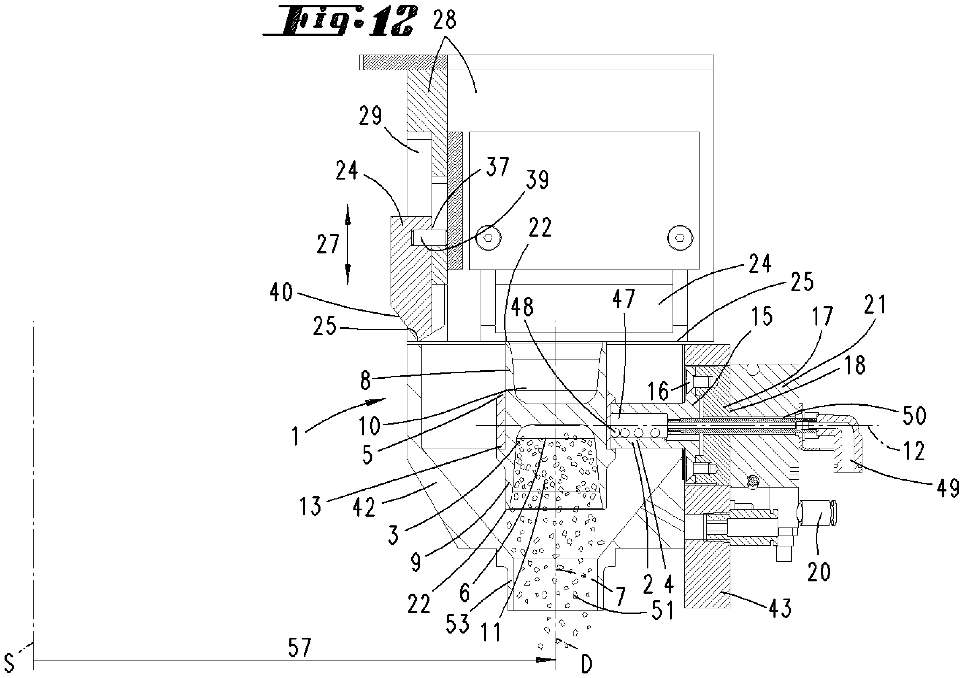

Mit Bezug auf die Figuren 1 bis 7 wird der Aufbau und die Funktion einer erfindungsgemäßen Dosiereinrichtung 1 gemäß einer bevorzugten Ausführungsform beschrieben. In diesen Darstellungen befindet sich das Dosiergefäß in der auch in Figur 12 gezeigten sog. zentralen Dosierposition, in welcher das schon dosierte Material aus dem Dosiergefäß ausgegeben wird. In dem gewählten Beispiel ist die Dosiereinrichtung 1 in einen Probenaufbereitungsautomaten integriert, von dem benachbarte Komponenten mit dargestellt sind. Die Dosiereinrichtung 1 umfasst den sog. Dosierlöffel 2, der im Wesentlichen aus einem Dosiergefäß 3 und einem daran seitlich angeschlossenen und zur Handhabung dienenden Dosierlöffelstiel 4 aufgebaut ist. Das Dosiergefäß 3 besitzt einen äußeren, mit Ausnahme einer Ringschulter 5 zylindrischen Mantel. Ein sich etwas versetzt zur Längsmitte erstreckender Zwischenboden 6 begrenzt einen oberen Dosierbecher 8 und einen unteren Dosierbecher 9, deren Gefäßhohlräume 10 bzw. 11 jeweils rotationssymmetrisch bzgl. einer Gefäßlängsachse 7 ausgebildet sind. In Längsmitte des Dosiergefäßes 3 wird die Gefäßlängsachse 7 rechtwinklig von einer Drehachse 12 geschnitten, um die das Dosiergefäß drehbar ist. Eine Hülse 13 umschließt das Dosiergefäß 3, wobei die Ringschulter 5 einen axialen Anschlag bietet. Eine in Fig. 3 gezeigte Klemmschraube 14 ermöglicht wahlweise eine verliersichere Befestigung oder im gelösten Zustand eine Entnahme des Dosiergefäßes, bspw. um dieses zu reinigen oder auszutauschen. Die Hülse 13 ist auf nicht näher dargestellte Weise mit dem Dosierlöffelstiel 4 verbunden, bspw. verschraubt. Der Dosierlöffelstiel 4 weist an dem gegenüberliegenden Längsende einen Flansch 15 auf, der mittels Schrauben 16 mit dem Rotor 17 eines nur schematisch angedeuteten pneumatischen Drehantriebs 18 verbunden ist. Wird ventilgesteuert über einen der Anschlüsse 19, 20 (vgl. Fig. 4) Druckluft zugeführt, führt der Rotor 17 relativ zu dem feststehenden Stator 21 eine Drehung um die Drehachse 12 aus. In der bspw. in Fig. 1 gezeigten Betriebsstellung ist der obere Dosierbecher 8 des Dosiergefäßes 3 nach oben hin offen, d.h. steht (vorzugsweise nach einer seitlichen Verfahrbewegung in die in Fig. 8 gezeigte Befüllungsposition) für einen Dosiervorgang bereit. Der in dieser Stellung obere Öffnungsrand 22 verläuft entlang einer Ebene und spannt einen insofern ebenfalls ebenen Öffnungsquerschnitt 23 auf. Um eine vergleichsweise geringere Menge zu dosieren, kann das Dosiergefäß 3 mittels des Drehantriebes 18 um eine halbe Drehung um die Drehachse 12 verdreht werden, so dass der Dosierbecher 9 mit seinem (zur Vereinfachung mit gleichen Bezugszeichen gekennzeichneten) Öffnungsrand 22 und dem Öffnungsquerschnitt 23 nach oben zeigt. Die Dosiereinrichtung umfasst des Weiteren einen Dosierabstreifer 24 mit einer dem Öffnungsquerschnitt 23 zugeordneten und zu ihm parallelen Abstreifkante 25. Wie mit Bezug insbesondere auf die Figuren 8 bis 14 noch näher beschrieben wird, ist das Dosiergefäß 3 seitlich, d.h. quer zur Gefäßlängsachse 7, beweglich geführt, zur Erzielung einer seitlichen Abstreifbewegung der Abstreifkante 25 entlang dem Öffnungsrand 22. Wie in Verbindung mit den Figuren 1 bis 4 weiter deutlich wird, weist die Dosiereinrichtung 1 in dem gewählten Beispiel zwei Dosierabstreifer 24 auf, deren Abstreifkanten 25 zueinander rechtwinklig verlaufen und die wahlweise zum Abstreifen von (in den Figuren 1 bis 7 nicht mit dargestelltem) Dosiergut dienen können. Beide Dosierabstreifer und ihnen jeweils angrenzende Bauteile besitzen abgesehen von den Abmessungen gleichen Aufbau und Funktion, so dass für entsprechende Komponenten auch jeweils gleiche Bezugszeichen verwendet werden. Jedem Dosierabstreifer 24 ist eine Längsführung 26 zugeordnet, vgl. auch Figuren 2, 2a und 6. Die mit 27 symbolisch angedeutete Führungsrichtung verläuft senkrecht zu dem Öffnungsquerschnitt 23 bzw. einer dazu parallelen Bezugsebene. Zur Bildung der Längsführungen 26 ist jeweils eine Führungswand 28 mit jeweils zwei darin parallel beabstandet in der besagten Führungsrichtung 27 verlaufenden Langlochdurchgangsöffnungen 29 vorgesehen. Die Dosierabstreifer 24 bilden auf ihrer der jeweils zugeordneten Führungswand 28 zuweisenden Seite jeweils zwei parallel beabstandete schienenartige Führungsvorsprünge 30 aus. Diese greifen unter Bildung der spielarmen Längsführung 26 in die Langlochdurchgangsöffnungen 29 ein. Fig. 2a verdeutlicht in Vergrößerung, dass dabei die Dicke D der Führungswand 28 größer als die Höhe H der Führungsvorsprünge 30, d.h. größer als die Eingriffstiefe, ist. Auf der dem Dosierabstreifer 24 gegenüberliegenden Seite der Führungswand 28 ist je eine Halte- bzw. Klemmplatte 31 angeordnet, die mit dem Dosierabstreifer 24 durch die Langlochdurchgangsöffnungen 29 hindurch mittels Schrauben 32, die in Gewindebohrungen in den Führungsvorsprüngen 30 eingreifen, verbunden ist. Wie insbesondere die Figuren 2, 2a veranschaulichen, wird die Führungswand 28 beim Andrehen bzw. Festziehen der Schrauben 32 sandwichartig zwischen dem Dosierabstreifer 24 und der Halteplatte 28 eingeklemmt. Dadurch entsteht eine normal bzw. senkrecht zu den jeweiligen Flächenpaarungen wirkende Klemmkraft, der dazu senkrecht, d.h. in der Ebene der Flächenpaarungen liegend, gekoppelt durch den Haft- bzw. Reibungsbeiwert, eine vorbestimmte Haltekraft zugeordnet ist. Diese Haltekraft ist auch in Führungsrichtung 27 der Längsführung 26 wirksam. Die Haltemittel 34 bzw. Klemmmittel zur Erzeugung der Haltekraft umfassen somit insbesondere die Führungswand 28, die Halteplatte 31 und die Schrauben 32. Die Schrauben 32 sind zufolge ihrer beschriebenen Bedeutung auch als Einstellmittel 35 zur dosierten, reproduzierbaren Einstellung bzw. Begrenzung der Haltekraft aufzufassen.

Die der Führungswand 28 zuweisende Oberfläche des Dosierabstreifers 24 weist eine Zylinderbohrung 36 auf, in die ein Zylinderstift 37, mit seinem Ende überstehend, eingesetzt ist. Der Zylinderstift 37 greift in ein mittleres Langloch 38 in der Führungswand 28 ein, das sich mittig zwischen und parallel zu den Langlochdurchgangsöffnungen 29 erstreckt. Während jedoch die Langlochdurchgangsöffnungen nach unten hin offen sind (vgl. Fig. 6), ist das Langloch 38 nach unten geschlossen. In der in Fig. 1 gezeigten Verlagerungsposition stützt sich der Zylinderstift 37 am unteren Rand des Langloches 38 ab, wodurch zwischen dem Dosierabstreifer 24 und der Führungswand 28 bzw. der Längsführung 26 ein formschlüssiger Anschlag 39 entsteht. Dieser begrenzt die Verlagerung des Dosierabstreifers 24 entlang der Längsführung in Richtung auf das Dosiergefäß 3 und bestimmt ein bevorzugtes Abstreifniveau, in welchem sich die Abstreiferkante 25, wie in Fig. 1 dargestellt, auf im wesentlichen gleicher Höhe wie der Öffnungsrand 22 bzw. der Öffnungsquerschnitt 23 befindet. Aus Fig. 1 geht auch hervor, dass der Dosierabstreifer 24 eine an die Abstreifkante 25 angrenzende Schrägfläche 40 aufweist, die mit einer gestrichelt dargestellten Bezugslinie 41, die in der von dem Öffnungsquerschnitt 23 aufgespannten Ebene liegt, einen Neigungswinkel α von in dem Beispiel etwa 60 Grad einschließt.

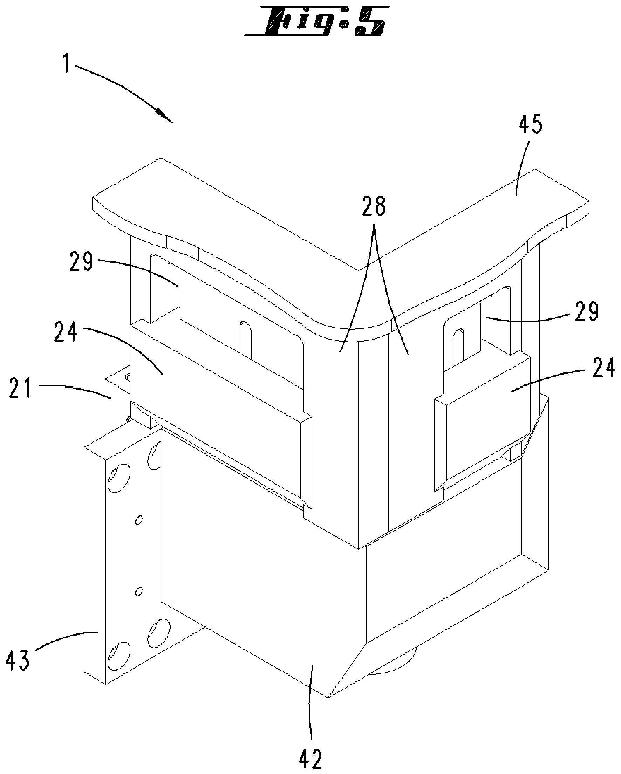

In den Figuren 1 bis 7 ist auch dargestellt, dass der Dosierlöffel 2 bzw. das Dosiergefäß 3 mit zur Drehung ausreichendem Seitenabstand im Inneren eines Schütttrichters 42 angeordnet ist. An dessen einer Seite ist eine Halteplatte 43 angeschraubt, deren Befestigungsabschnitt 44 zum Anschrauben der Baugruppe an eine in den Figuren nicht mit dargestellte Verfahreinrichtung dient. Dabei kann es sich um eine Antriebseinrichtung handeln, mittels der die gesamte, im Wesentlichen aus dem Schütttrichter 42, dem Dosierlöffel 2 und dem Drehantrieb 18 gebildete Baugruppe seitlich, d.h. quer zu der Gefäßlängsachse 7, bewegt werden kann, um eine seitliche Abstreifbewegung relativ zu einem gewählten Dosierabstreifer 24 zu erzeugen. In dem gewählten Beispiel sind die Führungswände 28 auf nicht näher dargestellte Weise fest mit einer in Seitenrichtung ortsfesten, bspw. in den Figuren 4 und 5 im Aufbruch dargestellten Wandung 45 des Probenaufbereitungsautomaten verbunden, d.h. auch die Dosierabstreifer 24 werden seitlich nicht bewegt. Um in das Dosiergefäß 3 eingefülltes Dosiergut zur möglichst genauen Dosierung vor dem Abstreifvorgang noch verdichten zu können, ist die gezeigte Dosiereinrichtung 1 mit einem pneumatischen Vibrationsantrieb ausgestattet. Dieser umfasst eine in den Dosierlöffelstiel 4 integrierte Strömungskammer 47, in welcher Stahlkugeln 48 beweglich aufgenommen sind. Durch eine zentrale Zuleitung 49 kann ein Druckfluid, vorzugsweise Druckluft, zugeführt werden, wobei es zu Verwirbelungen in der Strömungskammer 47 kommt und das überschüssige Druckfluid durch eine von einem konzentrischen Ringspalt gebildete Ableitung 50 in die Umgebung entweichen kann. Die Verwirbelungen reißen die Kugeln 48 mit, wodurch diese unter Entstehung der gewünschten Vibrationen gegen die Kammerwände schlagen.

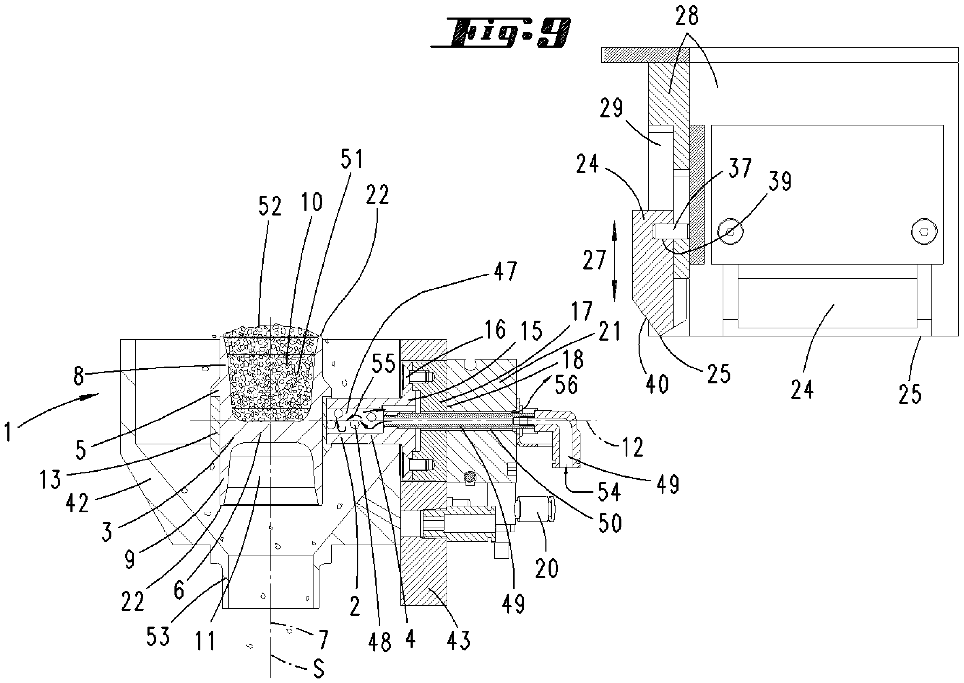

Mit Bezug auf die Figuren 8 bis 13 wird ein bevorzugtes Dosierverfahren gemäß einer ersten bevorzugten Ausführungsform unter Verwendung einer erfindungsgemäßen, schon zu den Figuren 1 bis 7 erläuterten Dosiereinrichtung 1 beschrieben. Bei dem in Fig. 8 dargestellten Verfahrensschritt ist die Baugruppe mit dem Dosiergefäß 3 zur Aufnahme eines rieselfähigen Dosiergutes 51 von der zentralen Dosierposition D in eine Aufnahmestellung, welche auch als Startposition S der Probenentnahme bezeichnet wird, verfahren. In dem Beispiel handelt es sich bei dem Dosiergut 51 um ein Granulat, welches aus einer oberen, nicht mit dargestellten Vorratskammer zur Befüllung des Dosiergefäßes 3 von oben in den Schütttrichter 42 eingeschüttet wird. Ein Teil des Dosierguts 51 füllt den oberen Dosierbecher 8 bei zunächst geringer Packungsdichte auf, bis ein Schüttkegel 52 entsteht. Davon herabrutschendes und seitlich herabfallendes Dosiergut 51 wird durch den Trichterauslass 53 abgeführt. Bei dem folgenden, in Fig. 9 gezeigten Verfahrensschritt wird noch in der Startposition S des Dosiergefäßes 3 Druckluft in Pfeilrichtung 54 in die Strömungskammer 47 zugeführt, führt dort zu Verwirbelungen 55 und entweicht in Pfeilrichtung 56. Die von den Stahlkugeln 48 erzeugten Vibrationen bewirken eine gewünschte Verdichtung des Dosierguts 51 im Dosiergefäß 3. Indem dadurch Einlagerungs-Hohlräume reduziert werden, wird die Genauigkeit der volumetrischen Dosierung verbessert. Entsprechend ist in Fig. 9 im Vergleich zu Fig. 8 die Packungsdichte symbolisch größer und der Schüttkegel 52 flacher dargestellt.

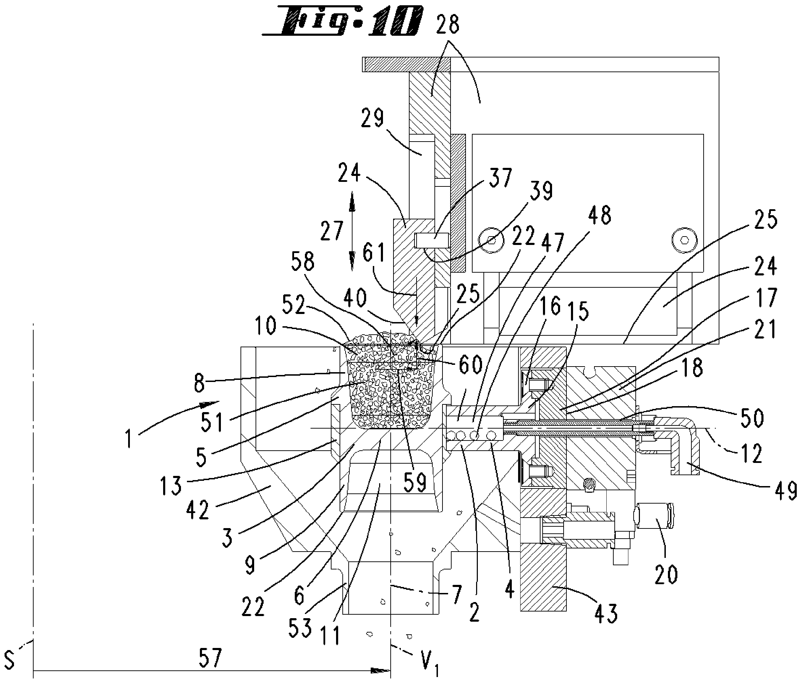

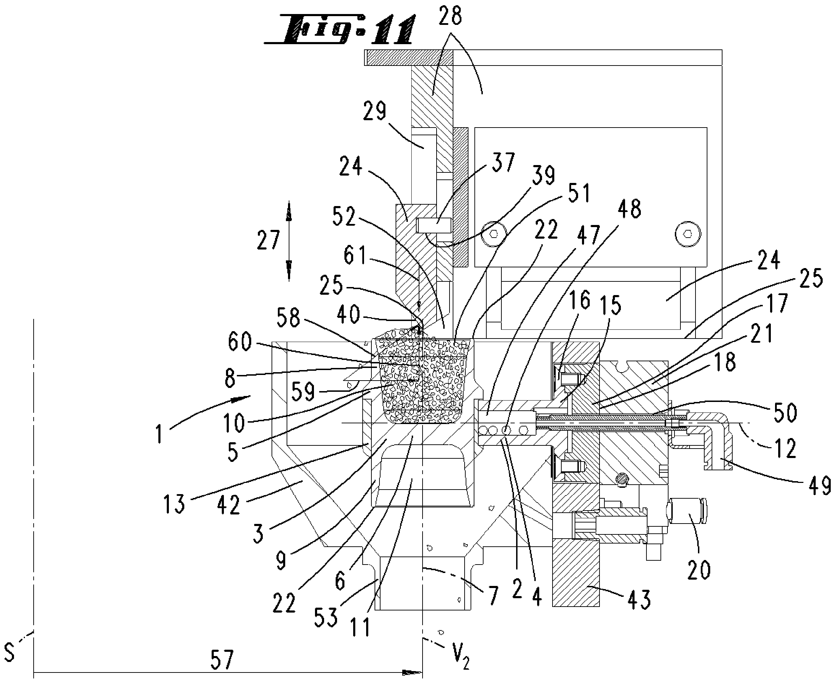

In Fig. 10 wurde davon ausgehend zum Abstreifen des verbliebenen Schüttkegels 52 das Dosiergefäß 3 und der umgebende Schütttrichter 42 mittels der in den Figuren nicht mit gezeigten Verfahreinrichtung ausgehend von der Befüllungs- bzw. Startposition S in einer parallel zur Zeichenebene und senkrecht zu Gefäßlängsachse 7 verlaufenden Verfahrrichtung 57 zunächst bis in die mit VI gekennzeichnete Verfahrstellung verfahren. Dabei wird die Schrägfläche 40 des Dosierabstreifers 24 gegen den Schüttkegel 52 angedrückt und dieser mit zunehmender Verfahrbewegung 57 seitlich abgestreift, wobei das abgestreifte Dosiergut 51 durch den Trichterauslass 53 entweicht. Zufolge des Abstreifens wirkt auf die Schrägfläche 40 eine symbolisch angedeutete Druckkraft 58, die eine horizontale Komponente 59 und eine vergleichsweise kleinere (dargestellt durch die kürzere Länge des Pfeils) vertikale Komponente 60 aufweist. Letztere wirkt in bzw. parallel zu der Führungsrichtung 27, d.h. wirkt der von den Haltemitteln 34 bewirkten, ebenfalls symbolisch angedeuteten Haltekraft 61 entgegen. Lässt sich der Schüttkegel 52 fluidartig leicht abstreifen, liegt die Komponente 60 betragsmäßig in einem im Vergleich zu der Haltekraft 61 geringeren Wertebereich, und der Dosierabstreifer 24 wird in der gezeigten, von dem Anschlag 39 bestimmten Dosierposition gehalten. Kommt es andererseits beim Abstreifen des Schüttkegels, wie in Fig. 11 für die nachfolgende Verfahrstellung V2 symbolisch angedeutet, zum Verklemmen oder Verkanten von Dosiergut 51, kann die Druckkraft 58 größere Beträge annehmen, was qualitativ durch eine größere Pfeillänge angedeutet ist. Da in Fig. 11 die durch das Abstreifen bewirkte vertikale Komponente 60 größer als die Haltekraft 61 ist, wird der Dosierabstreifer 24 automatisch entlang seiner Längsführung 26 rückverlagert, d.h. entfernt sich von dem Öffnungsquerschnitt 23. Die Kraft 58 wird dadurch wieder verringert, wodurch Beschädigungen vermieden werden können.

Fig. 12 zeigt einen weiteren Verfahrensschritt, bei welchem ausgehend von Fig. 10 der Abstreifvorgang ungestört beendet wurde und sich die Gefäßlängsachse 7 in einer Endposition, welche der zentralen Dosierposition der Dosiereinrichtung 1 (siehe auch Fig. 1) entspricht, befindet. In dieser Position wird der pneumatische Drehantrieb 18 aktiviert und das Dosiergefäß um eine halbe Drehung verdreht, so dass das Dosiergut 51 in der volumetrisch dosierten Menge nach unten fällt und unter dem Trichterauslass 53 aufgefangen wird.

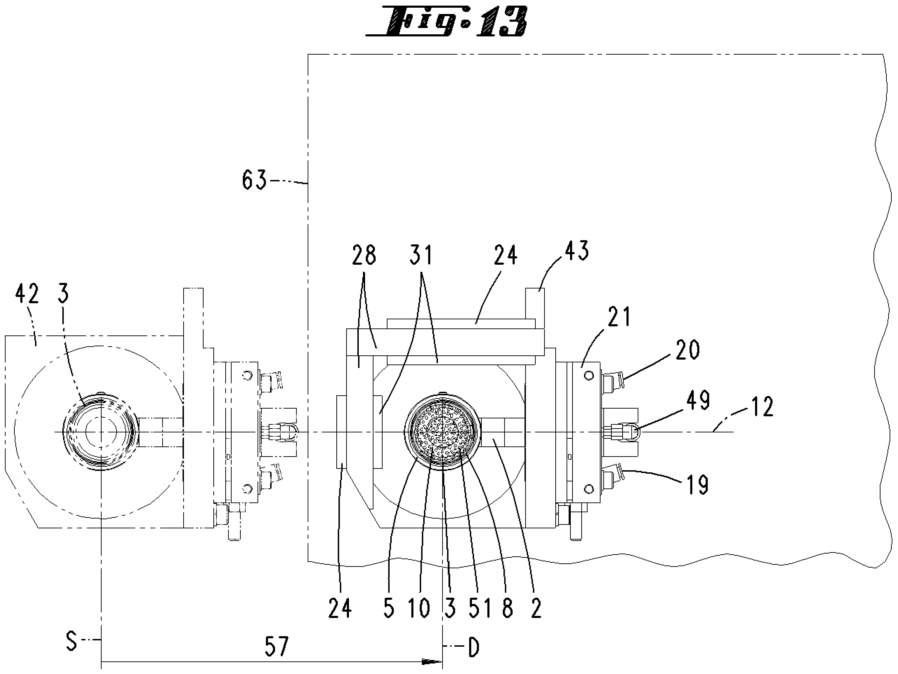

Figur 13 zeigt schematisch in einer Draufsicht entsprechend der Blickrichtung XIII aus Figur 1 den Verfahrensablauf, welcher zuvor anhand der Figuren 8 bis 12 erläutert wurde. Die seitlich verfahrbare Baugruppe der Dosiereinrichtung 1 ist hier mit durchgezogenen Linien in der Dosierposition D mit einem befüllten und abgestrichenen Dosiergefäß 3 dargestellt. Wie durch den gestrichelt angedeuteten Gehäuseverlauf 63 und die angrenzende Abbruchlinie dargestellt, befindet sich die Baugruppe dabei im Gehäuseinneren einer Probenaufbereitungsvorrichtung. Um mit Dosiergut 51 befüllt werden zu können, muss das Dosiergefäß 3 zunächst aus dem Gehäuse 63 entgegen Pfeilrichtung 57 bis in die Startposition S verfahren werden. Wie die Dosierposition D wird die Startposition S auf den Mittelpunkt des Dosiergefäßes bezogen. In der besagten außerhalb der Probenaufbereitungsvorrichtung liegenden Startposition S sind das Dosiergefäß 3 und der Schütttrichter 42 als Baugruppe in einer Strich-Zweipunktlinie dargestellt. Ausgehend von der Startposition S wird, wie zuvor beschrieben, das Dosiergefäß 3 von oben mit Dosiergut 51 gefüllt, bis ein Schüttkegel 52 entsteht. Danach wird das Dosiergut 51 in der Startposition S über einen gewissen Zeitraum hinweg mittels der Vibrationseinrichtung verdichtet, bis eine gewünschte bzw. endgültige Packungsdichte resultiert. Durch die Vibrationen wird der Schüttkegel 52 abgeflacht. Anschließend wird die gestrichelte verfahrbare Baugruppe in Pfeilrichtung 57 bis in die Endposition, d. h. bis in die zentrale Dosierposition D verfahren. Während dieser Verfahrbewegung wird der restliche Schüttkegel 52 vom Dosierabstreifer 24 entfernt. In der zentralen Dosierposition D wird das dosierte Probenmaterial bzw. Dosiergut 51 durch Verschwenken des Dosiergefäßes 3 um 180 Grad bzw. um eine halbe Umdrehung in den darunter befindlichen Schütttrichter 42 geschüttet und kann dann mit Hilfe des Trichterauslasses 53 in einen bereitgehaltenen Probenbehälter abgefüllt werden. Zur Unterstützung des Entleerungsprozesses kann erneut die schon beschriebene Vibrationseinrichtung aktiviert werden. Das Entleeren des Dosiergefäßes 3 geschieht somit innerhalb des Gehäuses 63 der Probenaufbereitungsvorrichtung.

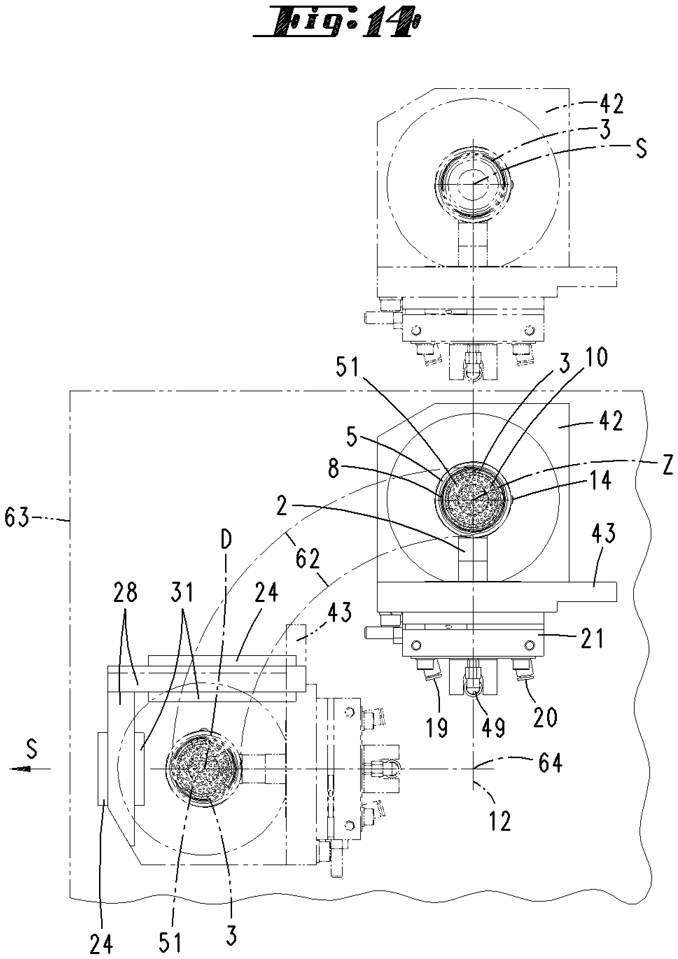

Figur 14 zeigt ebenfalls in Draufsicht (d. h. Blickrichtung wie in Figur 13) eine Abwandlung des erfindungsgemäßen Verfahrens. Der wieder gestrichelt dargestellte Gehäuseverlauf (Gehäuseecke) und die Position und Anordnung der Führungswände 28 bzw. Dosierabstreifer 24 ermöglicht die geometrische Zuordnung zu Figur 13. Ausgehend von der zentralen Dosierposition D wird bei diesem Verfahren die seitlich bewegliche Baugruppe mit dem Dosiergefäß 3 zunächst entlang einer bogenförmigen Bahn 62, die sich bezüglich eines Drehpunktes 64 über eine Vierteldrehung hinweg erstreckt, bis in eine Zwischenposition Z verfahren. Dies erfolgt mittels einer zeichnerisch wieder nicht mit dargestellten Verfahreinrichtung, die an der Halteplatte 43 angreifen kann. Speziell kann die Verfahreinrichtung einen an der Platte 43 montierten Haltearm aufweisen und die Verfahrbewegung von Position D zu Position Z durch eine Drehbewegung des Haltearms um den Drehpunkt 64 erfolgen. Aus der Position Z wird die verfahrbare Baugruppe mit dem Dosiergefäß 3 translatorisch durch eine nicht gesondert dargestellte Öffnung in dem Gehäuseverlauf 63 in die Startposition S verfahren. Dort befindet sich die bewegliche Baugruppe außerhalb der Probenaufbereitungsvorrichtung und kann von oben in der schon zuvor beschriebenen Weise mit Dosiergut 51 befüllt werden, bis ein Schüttkegel entsteht. Anschließend wird die bewegliche Baugruppe mit dem Dosiergefäß 3 durch die nicht näher dargestellte Gehäuseöffnung wieder zurück bis in die innerhalb des Probenaufbereitungsautomaten befindliche Position Z geradlinig verfahren. Während dieser Verfahrbewegung und/ oder in der Position Z kann das Verdichten des Probenmaterials 51 mittels der beschriebenen Vibrationseinrichtung erfolgen. Anschließend wird die bewegliche Baugruppe mit dem Dosiergefäß 3 im Zuge einer Schwenkbewegung entlang der Bahnkurve 62 wieder bis in die Endposition, d. h. in die zentrale Dosierposition D verfahren, wobei das Dosiergefäß 3 den (im Vergleich zu Figur 13 anderen) Dosierabstreifer 24 passiert und der Schüttkegel von diesem abgestreift wird. In der zentralen Dosierposition D kann das Dosiergefäß 3 auf die schon beschriebene Weise umgekehrt werden, um das dosierte Material freizugeben. Eventuell dabei an dem Dosiergefäß 3 anhaftendes Dosiergut kann durch Aktivierung der Vibrationseinrichtung abgelöst werden.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Dosiereinrichtung zur volumetrischen Dosierung von rieselfähigem Dosiergut, insbesondere von rieselfähigem Probenmaterial, aufweisend zumindest ein nach oben hin offenes, insbesondere becherartiges, Dosiergefäß, dessen Öffnungsrand einen Öffnungsquerschnitt bestimmt, und zumindest einen Dosierabstreifer mit einer dem Öffnungsquerschnitt zugeordneten, insbesondere dazu parallel verlaufenden, Abstreifkante, wobei das Dosiergefäß und / oder der Dosierabstreifer, insbesondere geführt, beweglich ist / sind zur Erzielung einer seitlichen relativen Abstreifbewegung zwischen dem Dosiergefäß und der Abstreifkante, wobei eine Längsführung (26) vorgesehen ist, entlang welcher der Dosierabstreifer (24) quer, insbesondere senkrecht, zu dem Öffnungsquerschnitt (23) geführt verlagerbar ist, **dadurch gekennzeichnet, dass** Haltemittel (34) vorgesehen sind, die zur Erzeugung und größenmäßig veränderbaren Einstellung einer auf den Dosierabstreifer (24) in Bezug auf die Längsführung (26) einwirkenden Haltekraft (61) geeignet sind, bei deren Überwindung durch Kräfte (60), die zufolge des Abstreifvorgangs auf den Dosierabstreifer (24) einwirken, eine Rückverlagerung des Dosierabstreifers (24) entlang der Längsführung (26) resultiert.

2. Dosiereinrichtung nach Anspruch 1, **dadurch gekennzeichnet, dass** die Haltemittel (34) Einstellmittel (35) aufweisen, die eine dosierte, reproduzierbare Einstellung der Haltekraft (61) ermöglichen.

3. Dosiereinrichtung nach einem oder mehreren der vorangehenden Ansprüche, **dadurch gekennzeichnet, dass** die Längsführung (26) eine Führungswand (28) aufweist mit zumindest einer darin ausgebildeten, quer, insbesondere senkrecht, zu dem Öffnungsquerschnitt (23) des Dosiergefäßes (3) orientierten Langlochdurchgangsöffnung (29), in die darin längsverschieblich ein Führungsvorsprung (30) des Dosierabstreifers (24) eingreift, wobei insbesondere die Dicke (D) der Führungswand (28) größer als die Eingriffstiefe (H) des Führungsvorsprungs (30) darin ist.

4. Dosiereinrichtung nach Anspruch 3, **dadurch gekennzeichnet, dass** zwei oder mehr zueinander parallel orientierte Langlochdurchgangsöffnungen (29) mit darin jeweils eingreifenden Führungsvorsprüngen (30) vorgesehen sind.

5. Dosiereinrichtung nach einem oder beiden der Ansprüche 3,4, **dadurch gekennzeichnet, dass** auf der dem Dosierabstreifer (24) gegenüberliegenden Seite der Führungswand (28) eine Halteplatte (31) angeordnet ist, die mit dem Dosierabstreifer (24) durch die Langlochdurchgangsöffnung (29) hindurch mittels einer in der Klemmkraft einstellbaren Klemmverbindung, insbesondere mittels einer Schraubverbindung, verbunden ist.

6. Dosiereinrichtung nach einem oder mehreren der vorangehenden Ansprüche 3 bis 5, **dadurch gekennzeichnet, dass** die Halteplatte (31) aus einem anderen Material besteht als die Führungswand (28) und / oder als ein Klemmbereich des Dosierabstreifers.

7. Dosiereinrichtung nach einem oder mehreren der vorangehenden Ansprüche 3 bis 6, **dadurch gekennzeichnet, dass** die Führungswand (28) aus Stahl oder aus Aluminium und die Halteplatte aus Metall, insbesondere aus Buntmetall wie Kupfer oder Messing, hergestellt ist.

8. Dosiereinrichtung nach einem oder mehreren der vorangehenden Ansprüche 3 bis 7, **dadurch gekennzeichnet, dass** der Dosierabstreifer (24) gemeinsam mit der Führungswand (28) bzw. mit der Längsführung (26) einen die Verlagerung des Dosierabstreifers (24) entlang der Längsführung (26) in Richtung auf das Dosiergefäß (3) formschlüssig begrenzenden, insbesondere positionseinstellbaren, Anschlag (39) ausbildet, wobei sich in der Anschlagstellung die Abstreifkante (25) insbesondere auf Höhe des Öffnungsrandes (22) des Dosiergefäßes (3) befindet.

9. Dosiereinrichtung nach einem oder mehreren der vorangehenden Ansprüche, **dadurch gekennzeichnet, dass** der Dosierabstreifer (24) eine an die Abstreifkante (25) angrenzende Schrägfläche (40) aufweist, die in einer zu der Kantenlängsrichtung senkrechten Querschnittsebene mit einer horizontalen Bezugslinie (41), insbesondere mit dem Öffnungsquerschnitt (23) des Dosiergefäßes (3), einen freien Neigungswinkel (α) von weniger als 90 Grad, insbesondere einen Neigungswinkel im Wertebereich von etwa 30 bis 60 Grad, einschließt.

10. Dosiereinrichtung nach einem oder mehreren der vorangehenden Ansprüche 3 bis 9, **dadurch gekennzeichnet, dass** die Führungswand (28) mit dem Dosierabstreifer (24) quer zur Führungsrichtung (27) der Längsführung (26) ortsfest gehalten ist, dass eine Verfahreinrichtung vorgesehen ist und dass das Dosiergefäß (3) mittels der Verfahreinrichtung quer zu der Führungsrichtung (27) der Längsführung (26) und / oder parallel zu dem Öffnungsquerschnitt (23), insbesondere in Form einer geraden oder bogenförmigen Verfahrbewegung, unter dem Dosierabstreifer (24) hindurch verfahrbar ist.

11. Dosiereinrichtung nach einem oder mehreren der vorangehenden Ansprüche 3 bis 9, wobei eine Verfahreinrichtung vorgesehen ist, oder Dosiereinrichtung nach Anspruch 10, **dadurch gekennzeichnet, dass** die Dosiereinrichtung (1) zwei zueinander quer, insbesondere rechtwinklig, verlaufende Führungswände (28) mit je einem Dosierabstreifer (24) gemäß Merkmalen aus einem oder mehreren der vorangehenden Ansprüche aufweist und dass die Verfahreinrichtung daran angepasst ist, dass damit das Dosiergefäß (3) wahlweise in einer geraden Verfahrbewegung unter dem ersten Dosierabstreifer (24) oder in einer bogenförmigen Verfahrbewegung unter dem zweiten Dosierabstreifer (24) hindurch verfahrbar ist.

12. Probenaufbereitungsvorrichtung, insbesondere Probenaufbereitungs- und -untersuchungsvorrichtung, aufweisend eine Dosiereinrichtung gemäß einem oder mehreren der vorangehenden Ansprüche.

13. Dosierverfahren zur volumetrischen Dosierung von rieselfähigem Dosiergut, insbesondere von rieselfähigem Probenmaterial, unter Verwendung einer Dosiereinrichtung, aufweisend zumindest ein nach oben hin offenes, insbesondere becherartiges, Dosiergefäß, dessen Öffnungsrand einen Öffnungsquerschnitt bestimmt, und zumindest einen Dosierabstreifer mit einer dem Öffnungsquerschnitt zugeordneten, insbesondere dazu parallel verlaufenden, Abstreifkante, wobei das Dosiergefäß mit rieselfähigem Dosiergut zunächst bis über den Öffnungsquerschnitt befüllt wird und später das Dosiergefäß und / oder der Dosierabstreifer zum Abstreifen von Dosiergut oberhalb des Öffnungsquerschnitts, insbesondere zum Abstreifen eines Schüttkegels, seitlich bewegt wird unter Erzeugung einer relativen Abstreifbewegung zwischen dem Dosiergefäß und der Abstreifkante, wobei eine Dosiereinrichtung (1) verwendet wird, welche eine Längsführung (26) aufweist, entlang welcher der Dosierabstreifer (24) quer, insbesondere senkrecht, zu dem Öffnungsquerschnitt (23) verlagerbar ist, **dadurch gekennzeichnet, dass** auf den Dosierabstreifer (24) in Bezug auf die Längsführung (26) eine Haltekraft (61) ausgeübt wird, die betragsmäßig innerhalb des Größenbereichs der bei dem Abstreifvorgang auf den Dosierabstreifer (24) in dessen Führungsrichtung (27) wirkenden Kräfte (60) liegt, so dass sich der Dosierabstreifer (24) bei Überwindung der Haltekraft (61) durch eine zufolge des Abstreifvorgangs auf den Dosierabstreifer (24) einwirkenden Kraft (60) entlang der Längsführung (26) zurückverlagert.

14. Dosierverfahren nach Anspruch 13, **dadurch gekennzeichnet, dass** die Haltekraft (61) so eingestellt wird, dass sie betragsmäßig innerhalb, insbesondere am unteren Rand, eines oberen Teilbereichs, insbesondere des oberen Drittels oder oberen Viertels oder oberen Fünftels, des Wertebereichs liegt, innerhalb dessen die von dem Abstreifvorgang auf den Dosierabstreifer (24) in dessen Führungsrichtung (27) ausgeübten Kräfte (60) liegen.

15. Dosierverfahren nach einem oder beiden der vorhergehenden Ansprüche 13,14, **dadurch gekennzeichnet, dass** die Einstellung der Haltekraft (61) unter Berücksichtigung des Öffnungsquerschnitts (23), insbesondere von dessen Form und Abmessungen, und unter Berücksichtigung des gewählten Dosierguts (51), insbesondere von dessen Form und Körnungsgröße, erfolgt.

## Claims

1. A dosing device for the volumetric dosing of pourable dosing material, in particular of pourable sample material, having at least one dosing vessel that is open towards the top in particular beaker-like dosing vessel, the opening edge of which defines an opening cross section, and at least one dosing scraper with a scraping edge assigned to the opening cross section and running in particular parallel thereto, wherein the dosing vessel and/or the dosing scraper is/are in particular guidedly moveable for achieving a lateral relative scraping movement between the dosing vessel and the scraping edge, wherein a longitudinal guide (26) is provided, along which the dosing scraper (24) is guidedly moveable transversely, in particular perpendicularly to the opening cross section (23), **characterized in that** retaining means (34) are provided which are suitable for generating a retaining force (61) that is variably adjustably in magnitude which acts on the dosing scraper (24) with respect to the longitudinal guide (26), upon the overcoming of which by forces (60), which as a consequence of the scraping process act on the dosing scraper (24), results in the dosing scraper (24) being moved back along the longitudinal guide (26).

2. The dosing device according to Claim 1, **characterized in that** the retaining means (34) have adjusting means (35) which make possible a metered reproducible adjustment of the retaining force (61).

3. The dosing device according to one or more of the preceding claims, **characterized in that** the longitudinal guide (26) has a guide wall (28) with at least one elongated hole through opening (29) formed therein orientated transversely, in particular perpendicularly to the opening cross section (23) of the dosing vessel (3), into which a guide projection (30) of the dosing scraper (24) moveable engages, wherein in particular the thickness (D) of the guide wall (28) is greater than the engagement depth (H) of the guide projection (30) therein.

4. The dosing device according to Claim 3, **characterized in that** two or more elongated through holes (29) orientated parallel to one another with guide projections (30) engaging therein in each case are provided.

5. The dosing device according to one or both of the Claims 3, 4, **characterized in that** on the side of the guide wall (28) located opposite the dosing scraper (24) a retaining plate (31) is arranged, which is connected to the dosing scraper (24) through the elongated hole through opening (29) by means of a clamping connection that is adjustable in the clamping force, in particular by means of a screw connection.

6. The dosing device according to one or more of the preceding Claims 3 to 5, **characterized in that** the retaining plate (31) consists of a material other than the guide wall (28) and/or than a clamping region of the dosing scraper.

7. The dosing device according to one or more of the preceding Claims 3 to 6, **characterized in that** the guide wall (28) is produced from steel or from aluminium and the retaining plate from metal, in particular from non-ferrous metal such as copper or brass.

8. The dosing device according to one or more of the preceding Claims 3 to 7, **characterized in that** the dosing scraper (24) jointly with the guide wall (28) or with the longitudinal guide (26) forms a stop (39) that can be adjusted in particular in terms of position which delimits the moving of the dosing scraper (24) along the longitudinal guide (26) in the direction of the dosing vessel (3) in a form-fit manner, wherein in the stop position the scraping edge (25) is located in particular at the height of the opening edge (22) of the dosing vessel (3).

9. The dosing device according to one or more of the preceding claims, **characterized in that** the dosing scraper (24) has an inclined surface (40) adjoining the scraping edge (25), which in a cross-sectional plane that is perpendicular to the edge longitudinal direction includes with a horizontal reference line (41), in particular with the opening cross section (23) of the dosing vessel (3), a free inclination angle (α) of less than 90°, in particular an inclination angle in the range of values of approximately 30 to 60 degrees.

10. The dosing device according to one or more of the preceding Claims 3 to 9, **characterized in that** the guide wall (28) with the dosing scraper (24) is held fixed in place transversely to the guiding direction (27) of the longitudinal guide (26), **in that** a moving device is provided and that the dosing vessel (3) by means of the moving device is moveable transversely to the guiding direction (27) of the longitudinal guide (26) and/or parallel to the opening cross section (23), in particular in the form of a straight or arc-shaped movement under the dosing scraper (24).

11. The dosing device according to one or more of the preceding Claims 3 to 9, wherein a moving device is provided, or dosing device according to Claim 10, **characterized in that** the dosing device (1) has two guide walls (28) which run transversely, in particular at a right angle to one another each with a dosing scraper (24) according to the features from one or more of the preceding claims and **in that** the moving device is adapted to the dosing vessel (3) thereby being optionally moveable through in a straight moving direction under the first dosing scraper (24) or in an arc-shaped moving direction under the second dosing scraper (24).

12. A sample preparation device, in particular sample preparation and examination device, comprising a dosing device according to one or more of the preceding claims.

13. A dosing method for the volumetric dosing of pourable dosing material, in particular of pourable sample material, using a dosing device comprising at least one dosing vessel that is open towards the top, in particular beaker-like dosing vessel, the opening edge of which defines an opening cross section, and at least one dosing scraper with a scraping edge assigned to the opening cross section in particular running parallel thereto, wherein the dosing vessel is filled with pourable dosing material initially as far as to above the opening cross section and later on the dosing vessel and/or the dosing scraper (24) for scraping off dosing material above the opening cross section, in particular for scraping off a dumping cone, is laterally moved generating a relative scraping movement between the dosing vessel and the scraping edge, wherein a dosing device (1) is used which has a longitudinal guide (26), along which the dosing scraper (24) is moveable in particular perpendicularly to the opening cross section (23), **characterized in that** a retaining force (61) is exerted on the dosing scraper (24) with respect to the longitudinal guide (26) which in the amount lies within the range of magnitude of the forces (60) acting on the dosing scraper (24) in its guiding direction (27) during the scraping process, so that the dosing scraper (24) on overcoming the retaining force (61) is moved back along the longitudinal guide (26) by a force (60) acting on the dosing scraper (24) as a consequence of the scraping process.

14. The dosing method according to Claim 13, **characterized in that** the retaining force (61) is adjusted so that in the amount it lies within in particular at a lower edge of an upper part range, in particular of the upper third or upper quarter or upper fifth of the range of values, within which the forces (60) exerted by the scraping process on the dosing scraper (24) in the guiding direction (27) of the same.

15. The dosing method according to any one or both of the preceding Claims 13, 14, **characterized in that** the adjustment of the retaining force (61) takes place taking into account the opening cross section (23), in particular of its shape and dimensions, and taking into account the chosen dosing material (51), in particular the shape and grain size of the same.

## Revendications

1. Dispositif de dosage pour assurer le dosage volumétrique de produits en vrac susceptibles de s'écouler, notamment un matériau d'échantillon susceptible de s'écouler, le dispositif comprenant au moins un récipient de dosage ouvert vers le haut, notamment en forme de gobelet, dont la bordure d'ouverture détermine une section transversale d'ouverture, et au moins un racleur de dosage avec une arête de raclage associée à la section transversale d'ouverture et s'étendant notamment de manière parallèle à celle-ci, dispositif de dosage
dans lequel le récipient de dosage et/ou le racleur de dosage est/ou sont mobile(s), notamment de manière guidée, en vue d'obtenir un mouvement de raclage latéral relatif, entre le récipient de dosage et l'arête de raclage, et
dans lequel il est prévu un guidage longitudinal (26) le long duquel le racleur de dosage (24) peut être déplacé en étant guidé transversalement, notamment perpendiculairement à la section transversale d'ouverture (23),
**caractérisé en ce que** sont prévus des moyens de maintien (34), qui sont adaptés à produire et à régler de manière variable en grandeur, une force de maintien (61) agissant sur le racleur de dosage (24) par rapport au guidage longitudinal (26), force de maintien, qui, lorsqu'elle est dépassée par des forces (60) agissant sur le racleur de dosage (24) en raison de l'opération de raclage, permet un déplacement de retrait du racleur de dosage (24) le long du guidage longitudinal (26).

2. Dispositif de dosage selon la revendication 1, **caractérisé en ce que** les moyens de maintien (34) comportent des moyens de réglage (35) permettant un réglage dosé et reproductible de la force de maintien (61).

3. Dispositif de dosage selon l'une ou plusieurs des revendications précédentes, **caractérisé en ce que** le guidage longitudinal (26) comporte une paroi de guidage (28) dans laquelle est formée au moins une ouverture de passage en trou oblong (29), qui est orientée transversalement, notamment perpendiculairement à la section transversale d'ouverture (23) du récipient de dosage (3), et dans laquelle s'engage en coulissement longitudinal, une protubérance de guidage (30) du racleur de dosage (24), l'épaisseur (D) de la paroi de guidage (28) étant notamment supérieure à la profondeur d'engagement (H) dans celle-ci, de la protubérance de guidage (30).

4. Dispositif de dosage selon la revendication 3, **caractérisé en ce que** sont prévues deux ouvertures de passage en trou oblong (29) ou davantage, orientées parallèlement les unes aux autres, et dans lesquelles s'engagent respectivement des protubérances de guidage (30).

5. Dispositif de dosage selon l'une ou les deux des revendications 3, 4, **caractérisé en ce que** sur le côté de la paroi de guidage (28), opposé au racleur de dosage (24), est agencée une plaque de maintien (31), qui est reliée au racleur de dosage (24) à travers l'ouverture de passage en trou oblong (29), au moyen d'une liaison par serrage dont la force de serrage est réglable, notamment au moyen d'une liaison à vis.

6. Dispositif de dosage selon l'une ou plusieurs des revendications précédentes 3 à 5, **caractérisé en ce que** la plaque de maintien (31) est constituée d'un autre matériau que la paroi de guidage (28) et/ou qu'une zone de serrage du racleur de dosage.

7. Dispositif de dosage selon l'une ou plusieurs des revendications précédentes 3 à 6, **caractérisé en ce que** la paroi de guidage (28) est fabriquée en acier ou en aluminium, et la plaque de maintien en métal, notamment en métal lourd non-ferreux comme le cuivre ou le laiton.

8. Dispositif de dosage selon l'une ou plusieurs des revendications précédentes 3 à 7, **caractérisé en ce que** le racleur de dosage (24) forme, en commun avec la paroi de guidage (28) respectivement avec le guidage longitudinal (26), une butée (39) qui limite, par butée mécanique positive, le déplacement du racleur de dosage (24) le long du guidage longitudinal (26) en direction du récipient de guidage (3), et dont la position est notamment réglable, l'arête de raclage (25) se trouvant, dans la position de butée, notamment à hauteur de la bordure d'ouverture (22) du récipient de dosage (3).

9. Dispositif de dosage selon l'une ou plusieurs des revendications précédentes, **caractérisé en ce que** le racleur de dosage (24) présente une surface inclinée (40) adjacente à l'arête de raclage (25) et formant, dans un plan de section transversale perpendiculaire à la direction longitudinale d'arête, avec une ligne de référence horizontale (41), notamment avec la section transversale d'ouverture (23) du récipient de dosage (3), un angle d'inclinaison libre (α) de moins de 90 degrés, notamment un angle d'inclinaison se situant dans une plage de valeurs d'environ 30 à 60 degrés.

10. Dispositif de dosage selon l'une ou plusieurs des revendications précédentes 3 à 9, **caractérisé en ce que** la paroi de guidage (48), avec le racleur de dosage (24), est maintenue en position fixe transversalement à la direction de guidage (27) du guidage longitudinal (26), **en ce qu'**il est prévu un dispositif de déplacement, et **en ce que** le récipient de dosage (3) peut être déplacé au moyen du dispositif de déplacement, transversalement à la direction de guidage (27) du guidage longitudinal (26) et/ou parallèlement à la section transversale d'ouverture (23), notamment sous la forme d'un mouvement de déplacement rectiligne ou en forme d'arc de cercle, en passant sous le racleur de dosage (24).

11. Dispositif de dosage selon l'une ou plusieurs des revendications précédentes 3 à 9, dans lequel il est prévu un dispositif de déplacement, ou bien dispositif de dosage selon la revendication 10, **caractérisé en ce que** le dispositif de dosage (1) comprend deux parois de guidage (28) avec chacune un racleur de dosage (24), qui s'étendent transversalement, notamment perpendiculairement l'une par rapport à l'autre, conformément à des caractéristiques de l'une ou de plusieurs des revendications précédentes, et **en ce que** le dispositif de déplacement est adapté à produire le déplacement du récipient de dosage (3), au choix selon un mouvement de déplacement rectiligne sous le premier racleur de dosage (24), ou bien selon un mouvement de déplacement en arc de cercle sous le deuxième racleur de dosage (24).

12. Dispositif de préparation d'échantillons, notamment dispositif de préparation et d'analyse d'échantillons, comportant un dispositif de dosage selon l'une ou plusieurs des revendications précédentes.

13. Procédé de dosage pour assurer le dosage volumétrique de produits en vrac susceptibles de s'écouler, notamment un matériau d'échantillon susceptible de s'écouler, en utilisant un dispositif de dosage comprenant au moins un récipient de dosage ouvert vers le haut, notamment en forme de gobelet, dont la bordure d'ouverture détermine une section transversale d'ouverture, et au moins un racleur de dosage avec une arête de raclage associée à la section transversale d'ouverture et s'étendant notamment de manière parallèle à celle-ci, procédé
d'après lequel le récipient de dosage est tout d'abord rempli jusqu'au-dessus de la section transversale d'ouverture, avec un produit en vrac à doser susceptible de s'écouler, et ensuite le récipient de dosage et/ou le racleur de dosage sont déplacés latéralement pour racler le produit à doser au-dessus de la section transversale d'ouverture, notamment pour racler un cône d'écoulement, en produisant un mouvement de raclage relatif entre le récipient de dosage et l'arête de dosage, et
d'après lequel on utilise un dispositif de dosage (1) qui comporte un guidage longitudinal (26) le long duquel le racleur de dosage (24) peut être déplacé transversalement, notamment perpendiculairement à la section transversale d'ouverture (23),
**caractérisé en ce que** l'on exerce sur le racleur de dosage (24) par rapport au guidage longitudinal (26), une force de maintien (61), qui, quant à sa valeur, se situe dans le domaine d'ordre de grandeur des forces (60) agissant lors de l'opération de raclage sur le racleur de dosage (24) dans sa direction de guidage (27), de sorte que le racleur de dosage (24), lors d'un dépassement de la force de maintien (61) par une force (60) agissant sur le racleur de dosage (24) en raison de l'opération de raclage, est déplacé en retrait le long du guidage longitudinal (26).

14. Procédé selon la revendication 13, **caractérisé en ce que** la force de maintien (61) est réglée de manière à se situer, quant à sa valeur, à l'intérieur, notamment à la limite inférieure d'une zone partielle supérieure, le tiers supérieur ou le quart supérieur ou bien encore le cinquième supérieur, de la plage de valeurs à l'intérieur de laquelle se situent les forces (60) exercées par l'opération de raclage sur le racleur de dosage (24) dans sa direction de guidage (27).

15. Procédé selon l'une ou les deux des revendications précédentes 13, 14, **caractérisé en ce que** le réglage de la force de maintien (61) est effectué en tenant compte de la section transversale d'ouverture (23), notamment de sa forme et de ses dimensions, et en tenant compte du produit à doser (51) sélectionné, notamment de sa forme et de sa grosseur de grain.
